# EUROPEAN PATENT APPLICATION

(11) **EP 4 496 048 A1**
(43) Date of publication of application: **22.01.2025**
(21) Application number: 24181746.9
(22) Date of filing: 12.06.2024
(51) Int. Cl.: H01M 8/04089, C01B 3/04, F01N 3/20, H01M 8/04082, H01M 8/04313, H01M 8/04746, H01M 8/04992, H01M 8/0606, H01M 8/22

(54) **APPARATUS FOR CONTROLLING AMMONIA FUEL CELL VEHICLE, METHOD FOR CONTROLLING THE SAME, AND A VEHICLE COMPRISING THE SAME**

(30) Priority: 21.07.2023 KR 20230095544
(71) Applicant: SK Innovation Co., Ltd., Seoul 03188 (KR)
(72) Inventor: PARK, Chan Saem, 34124 Daejeon (KR); KIM, Jae Jeong, 34124 Daejeon (KR); BAE, Sun Hyuk, 34124 Daejeon (KR)
(74) Representative: Prüfer & Partner mbB Patentanwälte · Rechtsanwälte

(57) **Abstract**

The present disclosure provides an apparatus and a method for controlling an ammonia fuel cell vehicle, which are capable of storing ammonia in an ammonia tank; decomposing the ammonia stored in the ammonia tank into hydrogen; controlling at least one of an ammonia supply amount to be supplied to the cracker and conditions of a cracker; calculating a predicted hydrogen consumption amount based on at least one of driving information and battery information; and controlling at least one of the ammonia supply amount and the conditions of the cracker based on the calculated predicted hydrogen consumption amount.

## Description

### [BACKGROUND OF THE INVENTION]

### 1. Field of the Invention

The present disclosure relates to an apparatus for controlling an ammonia fuel cell vehicle and a method for controlling the same.

### 2. Description of the Related Art

Recently, vehicles using existing fossil fuel such as gasoline are being replaced by vehicles using other alternative fuels. Among other alternative fuels, means of transportation using ammonia fuel cells is attracting attention. The ammonia-based fuel cell is a system which produces electricity and heat by reforming ammonia into hydrogen and supplying it as a fuel. Liquefied ammonia is a compound of hydrogen and nitrogen, and is in the spotlight as an eco-friendly energy source since it is easy to transport and store with low carbon emissions. There is an assessment that activating a reforming system using highly energy-dense and eco-friendly ammonia fuel is a transitional alternative toward a carbon-neutral society.

In recent years, more advanced ammonia fuel cell technologies have been developed. Many companies have developed the technologies in a way that a technology for converting ammonia into hydrogen is applied to large-scale facilities such as a charging station.

However, conventional technologies mainly focus on simply converting ammonia into hydrogen. In order to convert ammonia into hydrogen, very high temperatures are required and there are many additional apparatuses, such that large-scale facilities are inevitable. In addition, due to insufficient analysis of the vehicle conditions, vehicle driving information and vehicle battery information, there are problems that the optimal predicted hydrogen consumption amount could not be calculated, thereby resulting in excessive consumption of hydrogen.

### [SUMMARY OF THE INVENTION]

An object according to an aspect of the present disclosure is to provide an apparatus for controlling an ammonia fuel cell vehicle, by which excessive hydrogen consumption may be avoided.

To achieve this object, according to an aspect of the present invention, there is provided an apparatus for controlling an ammonia fuel cell vehicle, the apparatus including: an ammonia tank configured to store ammonia; a cracker configured to decomposes the ammonia stored in the ammonia tank into hydrogen; and an apparatus controller configured to control at least one of an ammonia supply amount to be supplied to the cracker and conditions of the cracker, wherein the apparatus controller is configured to: calculate a predicted hydrogen consumption amount based on at least one of driving information and battery information; and control at least one of the ammonia supply amount and the conditions of the cracker based on the calculated predicted hydrogen consumption amount.

The term "ammonia fuel cell vehicle" means a vehicle which is equipped with an ammonia fuel cell.

Herein, the apparatus controller may be configured to control not only one of, but optionally both of the ammonia supply amount to be supplied to the cracker and the conditions of the cracker. Further, the calculation of the predicted hydrogen consumption amount by the apparatus controller may be based not only one of, but optionally both of the driving information and the battery information. Further, the control by the apparatus controller may be based not only one of, but optionally both of the ammonia supply amount and the conditions of the cracker.

By providing such an apparatus for controlling an ammonia fuel cell vehicle, an ammonia fuel cell system may be controlled using at least one of driving information and battery information in order to stabilize an ammonia decomposition rate of a cracker and minimize residual ammonia when driving a vehicle equipped with the ammonia fuel cell.

Further, by providing the apparatus for controlling an ammonia fuel cell vehicle according to the present disclosure, a hydrogen consumption amount required for vehicle driving may be calculated based on at least one of driving information and battery information and controls the vehicle according to the predicted hydrogen consumption amount.

In addition, by providing a control device for a vehicle equipped with an ammonia fuel cell, hydrogen may be produced only when and what the vehicle needs during driving, and may improve battery efficiency, thereby contributing to environmental friendliness and producing clean energy.

Further, by providing a method for controlling an ammonia fuel cell vehicle, a battery may be prevented from being overcharged or residual ammonia from being supplied due to unnecessary ammonia to be supplied, by controlling an ammonia supply amount to be supplied to a cracker in an optimal level, thereby contributing to environmental friendliness and producing clean energy.

According to an embodiment, the apparatus controller may include a predicted hydrogen consumption amount calculation unit, an ammonia supply amount control unit, and a cracker condition control unit.

According to an embodiment, the driving information may include city driving section information, highway driving section information and traffic congestion information, and the predicted hydrogen consumption amount calculation unit calculates the predicted hydrogen consumption amount based on at least one of the city driving section information, the highway driving section information and the traffic congestion information.

Here, the predicted hydrogen consumption amount calculation unit may calculate the predicted hydrogen consumption amount based on not only one of, but optionally more than one or all of the city driving section information, the highway driving section information and the traffic congestion information.

According to an embodiment, the ammonia supply amount control unit may be configured to: calculate an ammonia supply amount required to secure the calculated predicted hydrogen supply amount; and control at least one of a pipe and a valve so as to supply the calculated ammonia supply amount to the cracker.

Here, the ammonia supply amount control unit may be configured to control not only one of, but optionally both of a pipe and a valve so as to supply the calculated ammonia supply amount to the cracker.

According to an embodiment, the cracker condition control unit controls internal conditions of the cracker so that an amount of ammonia decomposed into hydrogen in the cracker does not exceed the predicted hydrogen consumption amount.

According to an embodiment, the predicted hydrogen consumption amount calculation unit is configured to: confirm at least one of the driving information and the battery information at a predetermined periodic interval, and update the predicted hydrogen consumption amount based on at least one of the driving information and the battery information.

Here, the predicted hydrogen consumption amount calculation unit may be configured to confirm not only one of, but optionally both of the driving information and the battery information at a predetermined periodic interval, and update the predicted hydrogen consumption amount based on not only one of, but optionally both of the driving information and the battery information.

According to an embodiment, the apparatus may further include a display configured to display a graphic image, wherein the apparatus controller may be configured to: display icons to select automatic control or manual control of the ammonia supply amount by a user on the display; when receiving an automatic control input, automatically control the ammonia supply amount; and when receiving a manual control input, control the ammonia supply amount according to an input from the user.

According to an embodiment, the apparatus may further include an input unit configured to sense internal status information of the ammonia tank, wherein the apparatus controller may calculate the predicted hydrogen consumption amount based on at least one of the driving information, the battery information, and the sensed internal status information.

According to an embodiment, the internal status information may include at least one of temperature, pressure, and humidity of the ammonia tank.

Here, the apparatus controller may calculate the predicted hydrogen consumption amount based not only on one of, but optionally on more than one and optionally all of the driving information, the battery information, and the sensed internal status information of the ammonia tank. Further, the internal status information may include not only one of, but optionally more than one and optionally all of temperature, pressure, and humidity of the ammonia tank.

According to another aspect of the present invention, there is provided a method for controlling an ammonia fuel cell vehicle which is performed by an apparatus for controlling an ammonia fuel cell vehicle, the method including: storing ammonia in an ammonia tank; decomposing the ammonia stored in the ammonia tank into hydrogen; controlling at least one of an ammonia supply amount to be supplied to the cracker and conditions of a cracker; calculating a predicted hydrogen consumption amount based on at least one of driving information and battery information; and controlling at least one of the ammonia supply amount and the conditions of the cracker based on the calculated predicted hydrogen consumption amount.

Further, the method may use an apparatus as described by the previous embodiments.

According to a further embodiment of the method for controlling an ammonia fuel cell vehicle, after completion of a cycle of calculating the predicted hydrogen consumption amount, it is returned to the beginning of the cycle again based on the predicted hydrogen consumption amount and control the ammonia supply amount and the cracker conditions to reflect feedback and conduct feedback control.

According to another aspect of the present invention, there is provided a vehicle comprising an ammonia fuel cell and the apparatus for controlling the ammonia fuel cell as specified in the previous aspects and embodiments.

According to an embodiment of the present disclosure, it is possible to improve battery efficiency by producing only what a vehicle equipped with an ammonia fuel cell needs during driving.

According to an embodiment of the present disclosure, it is possible to prevent a battery from being overcharged or residual ammonia from being supplied due to unnecessary ammonia to be supplied, by controlling an ammonia supply amount to be supplied to a cracker in an optimal level.

According to an embodiment of the present disclosure, it is possible to stabilize an ammonia decomposition rate by controlling the cracker conditions based on the predicted hydrogen consumption amount.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a view illustrating a configuration of an apparatus for controlling an ammonia fuel cell vehicle ("an ammonia fuel cell vehicle control apparatus") and functions of an apparatus controller according to an embodiment of the present disclosure;
FIG. 2 is a block diagram illustrating a configuration of the ammonia fuel cell vehicle control apparatus according to an embodiment of the present disclosure;
FIG. 3 is a flowchart illustrating procedures of a method for controlling an ammonia fuel cell vehicle ("an ammonia fuel cell vehicle control method") according to an embodiment of the present disclosure;
FIG. 4 is a view illustrating the concept of the ammonia fuel cell vehicle control method according to an embodiment of the present disclosure;
FIG. 5 is a view illustrating a state where the ammonia fuel cell vehicle control apparatus according to an embodiment of the present disclosure is mounted on a vehicle;
FIG. 6 is a view illustrating an interface capable of adjusting an ammonia supply amount according to an embodiment of the present disclosure;
FIG. 7 is a view illustrating calculating a predicted hydrogen pressure and a consumption amount based on internal status information of an ammonia tank according to an embodiment of the present disclosure; and
FIG. 8 is a block diagram illustrating a configuration of the ammonia fuel cell vehicle control apparatus according to an embodiment of the present disclosure.

### [DETAILED DESCRIPTION OF THE INVENTION]

Hereinafter, the present disclosure will be described in detail through embodiments with reference to the accompanying drawings. However, the embodiments are merely illustrative and the present disclosure is not limited to the specific embodiments described by way of example.

The same reference numerals are denoted to the same components throughout the present disclosure. The present disclosure does not describe all elements of the embodiments, and general contents in the technical field to which the present disclosure pertains or overlapping contents between the embodiments will not be described. The terms `unit, module, member and block' used herein may be implemented as software or hardware, and depending on the embodiments, a plurality of `units, modules, members and blocks' may be implemented as one component, or one 'part, module, member, or block' may include a plurality of components.

Throughout the specification, when the explanatory phrase a part is "connected" to another part is used, this includes not only the case where the part is "directly connected" to the other part, but also the case where the part is "indirectly connected" to the other part, and the indirect connection includes connection through a wireless communication network.

In addition, when the explanatory phrase a part "comprises or includes" a component is used, this means that the part may further include the component without excluding other components, unless there is a description opposite thereto.

Throughout the specification, when the explanatory phrase a member is located "on" another member is used, this includes not only the case where the member is in contact with the other member, but also the case where another member exists between the two members.

Terms such as first and second, etc. are used to distinguish one component from another component, and the components are not limited by the above-described terms.

The singular forms "a," "an" and "the" are intended to include the plural forms as well, unless the context clearly indicates otherwise.

The identification numerals for each step are used for the convenience of description. The identification numerals do not describe the order of each step, and each step may be performed differently from the specified order unless a specific order is clearly described in the context.

In this specification, the ammonia fuel cell vehicle control apparatus may be implemented not only with a server system but also with various apparatuses that can perform computational processing and provide results thereof to a user. For example, the ammonia fuel cell vehicle control apparatus according to the present disclosure may include all of a computer, a server device and a portable terminal, or may be any form thereof.

Here, the computer may include, for example, a laptop or desktop computer, laptop PC, tablet PC, slate PC, etc. equipped with a web browser.

The server device is a server that processes information by performing communication with an external device, and may include an application server, computing server, database server, file server, game server, mail server, proxy server and web server.

The portable terminal is, for example, a wireless communication device with which portability and mobility are assured, and may include: all types of handheld wireless communication devices such as a personal communication system (PCS), global system for mobile communications (GSM), personal digital cellular (PDC), personal handyphone system (PHS), personal digital assistant (PDA), international mobile telecommunication (IMT)-2000, code division multiple access (CDMA)-2000, wideband code division multiple access (W-CDMA), wireless broadband internet (WiBro) terminal, and smart phone, etc.; and wearable devices such as a watch, ring, bracelet, anklet, necklace, glasses, contact lenses, and head-mounted-device (HMD), etc.

Functions related to vehicle control according to the present disclosure are operated through a processor and a memory. The processor may include one or a plurality of processors. In this case, the one or plurality of processors may be general-purpose processors such as a CPU, AP, or digital signal processor (DSP), etc., dedicated graphics processors such as a GPU or vision processing unit (VPU), etc., or dedicated artificial intelligence processors such as an NPU. The one or plurality of processors control to process input data according to predefined operation rules or artificial intelligence models stored in the memory. Alternatively, when the one or plurality of processors are dedicated artificial intelligence processors, the artificial intelligence dedicated processors may be designed with a hardware structure specialized for processing a specific artificial intelligence model.

The predefined operation rule or artificial intelligence model are characterized by being generated or trained through learning. As used herein, the expression "being generated or trained through learning" means that the basic artificial intelligence model is trained using a large number of learning data by a learning algorithm, thereby generating a predefined operation rule or artificial intelligence model set to perform the desired characteristics (or purposes). This learning may be accomplished in the device itself on which the artificial intelligence is performed according to the present disclosure, or may be accomplished through a separate server or system. Examples of learning algorithms include supervised learning, unsupervised learning, semi-supervised learning, or reinforcement learning, but they are not limited to the above-described examples.

The artificial intelligence model may consist of a plurality of neural network layers. Each of the plurality of neural network layers has a plurality of weight values, performs neural network calculation through calculations between the calculation results of the previous layer and the plurality of weight values. The plurality of weight values assigned to the plurality of neural network layers may be optimized by the learning results of the artificial intelligence model. For example, the plurality of weight values may be updated so that loss or cost values obtained from the artificial intelligence model are reduced or minimized during the learning process. The artificial neural network may include a deep neural network (DNN) such as a convolutional neural network (CNN), deep neural network (DNN), recurrent neural network (RNN), restricted Boltzmann machine (RBM), deep belief network (DBN), bidirectional recurrent deep neural network (BRDNN), or Deep Q-Networks, etc., but it is not limited to the above-described examples.

The processor may generate a neural network, cause the neural network to perform training through learning, perform calculation based on the received input data, generate information signals based on the execution results, or cause the neural network to perform retraining.

The neural network may include the convolutional neural network (CNN), recurrent neural network (RNN), perceptron, multilayer perceptron, feed forward (FF), radial basis network (RBF), deep feed forward (DFF), long short term memory (LSTM), gated recurrent unit (GRU), auto encoder (AE), variational auto encoder (VAE), denoising auto encoder (DAE), sparse auto encoder (SAE), Markov chain (MC), Hopfield network (HN), Boltzmann machine (BM), restricted Boltzmann machine (RBM), deep belief network (DBN), deep convolutional network (DCN), deconvolutional network (DN), deep convolutional inverse graphics network (DCIGN), generative adversarial network (GAN), liquid state machine (LSM), extreme learning machine (ELM), echo state network (ESN), deep residual network (DRN), differential neural computer (DNC), neural turning machine (NTM), capsule network (CN), Kohonen network (KN) and attention network (AN), but it is not limited thereto. Those skilled in the art will understand that it may include any neural network.

According to an exemplary embodiment of the present disclosure, the processor may include various artificial intelligence structures and algorithms such as GoogleNet, AlexNet, VGG Network, etc., for example, convolution neural network (CNN), region with convolution neural network (R-CNN), region proposal network (RPN), recurrent neural network (RNN), stacking-based deep neural network (S-DNN) state-space dynamic neural network (S-SDNN), deconvolution network, deep belief network (DBN), restricted Boltzmann machine (RBM), fully convolutional network (FCN), long short-term memory (LSTM) network, classification network, generative modeling, eXplainable AI, Continual AI, representation learning, AI for material design, BERT for natural language processing, SP-BERT, MRC/QA, Text Analysis, Dialog System, GPT-3, GPT-4, Visual Analytics for vision processing, Visual Understanding, Video Synthesis, Anomaly Detection for ResNet data intelligence, Prediction, Time-Series Forecasting, Optimization, Recommendation, Data Creation, and the like, but it is not limited thereto.

Hereinafter, embodiments of the present disclosure will be described in detail with reference to the accompanying drawings.

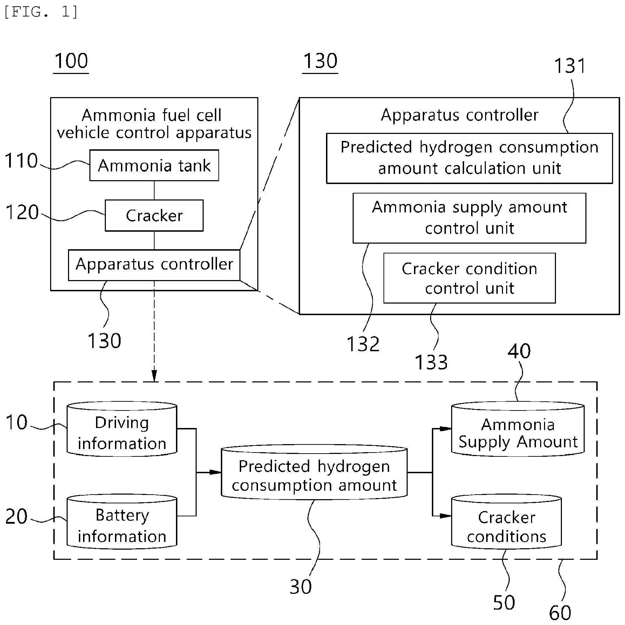

FIG. 1 is a view illustrating a configuration of an ammonia fuel cell vehicle control apparatus and functions of an apparatus controller according to an embodiment of the present disclosure.

Referring to FIG. 1, an ammonia fuel cell vehicle control apparatus 100 may include an ammonia tank 110, a cracker 120, and an apparatus controller 130.

The ammonia tank 110 may store ammonia.

The ammonia tank 110 may supply ammonia to the cracker as much as the ammonia supply amount determined according to a control command from the apparatus controller 130.

The cracker 120 may decompose the ammonia stored in the ammonia tank 110 into hydrogen.

Internal conditions of the cracker 120 may be controlled by the apparatus controller 130.

Here, the internal conditions may include temperature, pressure, humidity, flow rate, etc. of the cracker.

The apparatus controller 130 may control at least one of the ammonia supply amount to be supplied to the cracker 120 and the conditions of the cracker.

The apparatus controller 130 may calculate a predicted hydrogen consumption amount based on at least one of driving information and battery information, and control at least one of the ammonia supply amount and the conditions of the cracker based on the calculated predicted hydrogen consumption amount.

The apparatus controller 130 may include a predicted hydrogen consumption amount calculation unit 131, an ammonia supply amount control unit 132, and a cracker condition control unit 133.

Here, the driving information may refer to operation information of a vehicle monitored in real time from a macroscopic perspective.

For example, the driving information may include route information, traffic information, weather information and the like. The route information may include a departure point, a passing point, a destination, and a road type.

This driving information may be received from the ICU/MCU, collected using IoT sensors mounted on the vehicle and GPS, or received from an external device through cellular communication.

The collection of driving information will be described.

When it is possible to collect driving information from the vehicle, the driving information may be collected using IoT sensors and GPS mounted on the vehicle.

When it is impossible to collect driving information from the vehicle, the apparatus controller 130 may receive driving information from an external device 200. Here, the external device 200 may be a smartphone, laptop PC, or tablet PC of driver.

In addition, the driving information may include city driving section information, highway driving section information, and traffic congestion information.

The battery information may refer to information on the real-time state of battery charge. Here, the battery may refer to a battery installed in the vehicle.

For example, the battery information may include information on state of charge or discharge, voltage, current, etc. of the battery.

As the control method, i) a method for controlling an ammonia supply amount to be supplied to the cracker, or ii) a method for controlling the internal conditions of the cracker may be applied.

The predicted hydrogen consumption amount calculation unit 131 may calculate the predicted hydrogen consumption amount based on at least one of the city driving section information, the highway driving section information and the traffic congestion information.

The predicted hydrogen consumption amount calculation unit 131 may calculate the predicted hydrogen consumption amount corresponding to the driving information.

If there are a plurality of factors consisting the driving information, weights may be applied to individual factors. Here, the weights may be partly the same or partly different between the factors. A total weight of the factors may be 1.

If w1, w2 and w3 are weights, it may be set in a manner that w1=w2=0.3, and w3=0.4. Here, a sum of the weights (i.e., total weight) may be 1 (i.e., w1+w2+w3=1).

Next, the weights may differ between the factors.

If w1, w2 and w3 are weights, it may be set in a manner that w1=0.2, w2=0.3 and w3=0.5. Similarly, a sum of the weights may be 1 (i.e., w1+w2+w3=1).

For example, the predicted hydrogen consumption amount may be calculated by assigning weights to the city driving section, the highway driving section, a traffic congestion level, and the weather condition among the set routes.

A weight of w1 may be assigned to the city driving section x1, a weight of w2 may be assigned to the highway driving section x2, a weight of w3 may be assigned to the traffic congestion level x3, and a weight of w4 may be assigned to the weather condition x4. Here, the total weight may be 1 (w1+w2+w3+w4=1).

The predicted hydrogen consumption amount may be set as f(x) = x1w1+x2w2+x3w3+x4w4.

According to an embodiment of the present disclosure, the greatest weight may be assigned to the most important factor among the plurality of weight factors, and the weights assigned to the remaining factors may be equally set.

For example, on a snowy day, the weather condition may be the most important factor.

A weight of 0.4 may be assigned to the weather condition, and a weight of 0.2 may be equally assigned to the city driving section, the highway driving section, and the traffic congestion level.

According to an embodiment of the present disclosure, the predicted hydrogen consumption amount may be calculated more efficiently by assigning the greatest weight to the most important factor among the plurality of weight factors.

The predicted hydrogen consumption amount calculation unit 131 may calculate the predicted hydrogen consumption amount corresponding to battery information.

For example, the predicted hydrogen consumption amount may be calculated by monitoring a charge amount of the battery in real time so as to prevent battery overcharging or battery full-discharging.

The prevention of battery overcharging will be described.

When the battery capacity is 100 kWh, if the charged level is 90% or more of the battery capacity, the predicted hydrogen consumption amount may be decreased by a predetermined percentage.

For example, the predicted hydrogen consumption amount calculation unit 131 may decrease the predicted hydrogen consumption amount to about 10% of the previous predicted hydrogen consumption amount at a 30-second interval.

Then, the prevention of battery full-discharging will be described.

When the battery capacity is 100 kWh, if the charged level is less than 10% of the battery capacity, the predicted hydrogen consumption amount may be increased by a certain percentage.

For example, the predicted hydrogen consumption amount calculation unit 131 may increase the predicted hydrogen consumption amount by about 20% of the previous predicted hydrogen consumption amount at a 30-second interval.

Here, the rate of increased predicted hydrogen consumption amount may be set to be larger than that of the decreased predicted hydrogen consumption amount.

According to an embodiment of the present disclosure, the predicted hydrogen consumption amount may be appropriately adjusted by monitoring the charge amount of the battery in real time, such that the battery overcharging or battery full-discharging may be prevented.

The predicted hydrogen consumption amount calculation unit 131 may confirm at least one of the driving information and the battery information at a predetermined periodic interval, and update the predicted hydrogen consumption amount based on at least one of the driving information and the battery information.

According to an embodiment of the present disclosure, at least one of the driving information and the battery information which change in real time may be immediately reflected.

The ammonia supply amount control unit 132 may calculate an ammonia supply amount required to secure the calculated predicted hydrogen supply amount, and control at least one of a pipe and a valve so that the calculated ammonia supply amount may be supplied to the cracker 120.

The cracker condition control unit 133 may control the internal conditions of the cracker so that an amount of ammonia decomposed into hydrogen in the cracker 120 does not exceed the predicted hydrogen consumption amount.

Here, the cracker internal conditions may include, for example, one or more of internal temperature, internal pressure, internal humidity, ammonia flow rate and hydrogen flow rate of the cracker.

For example, the predicted hydrogen consumption amount may be 90 (the magnitude of a unit is a relative magnitude unit, and will be omitted) . In addition, a range of the predicted hydrogen consumption amount may be within a predetermined range, and this predetermined range may vary depending on the environment of the ammonia fuel cell vehicle control.

When the amount of ammonia decomposed into hydrogen reaches 95, the amount decomposed into hydrogen exceeds the predicted hydrogen consumption amount, such that the cracker condition control unit 133 may control at least one of the pipe and the valve to decrease the amount of ammonia decomposed into hydrogen to 90.

The cracker condition control unit 133 may control the internal conditions of the cracker so that the amount of ammonia decomposed into hydrogen in the cracker 120 does not fall below the predicted hydrogen consumption amount.

For example, when the amount of ammonia decomposed into hydrogen reaches 85, the amount decomposed into hydrogen falls below the range of predicted hydrogen consumption amount, such that the cracker condition control unit 133 may control at least one of the pipe and the valve to increase the amount of ammonia decomposed into hydrogen to 90.

Next, an embodiment of the predicted hydrogen consumption amount according to the present disclosure will be described.

Referring to a dotted line box 60 at the bottom of FIG. 1, the apparatus controller 130 may calculate a predicted hydrogen consumption amount 30 based on at least one of driving information 10 and battery information 20.

Based on the calculated predicted hydrogen consumption amount 30, at least one of, optionally both of, an ammonia supply amount 40 and cracker conditions 50 may be controlled.

According to an embodiment of the present disclosure, rather than simply ends with calculating the predicted hydrogen consumption amount, it is possible to return to the beginning of the cycle again based on the predicted hydrogen consumption amount and control the ammonia supply amount and the cracker conditions to reflect feedback, thereby providing more improved ammonia fuel cell vehicle control method.

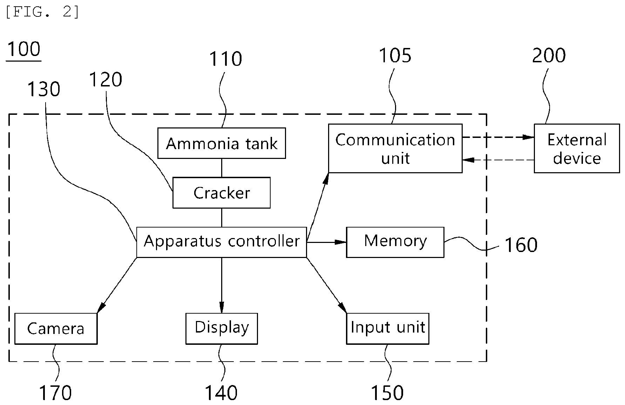

FIG. 2 is a block diagram illustrating a configuration of the ammonia fuel cell vehicle control apparatus according to an embodiment of the present disclosure.

Referring to FIG. 2, the ammonia fuel cell vehicle control apparatus 100 may include a communication unit 105, the ammonia tank 110, the cracker 120, the apparatus controller 130, a display 140, an input unit 150, a memory 160 and a camera 170.

The communication unit 105 may transmit and receive data with the external device 200. Here, the external device 200 may include a smartphone, desktop PC, laptop PC, tablet PC and the like.

The ammonia tank 110 may store ammonia.

The cracker 120 may decompose the ammonia stored in the ammonia tank 110 into hydrogen.

The apparatus controller 130 may control at least one of the ammonia supply amount to be supplied to the cracker 120 and the conditions of the cracker.

The apparatus controller 130 may calculate the predicted hydrogen consumption amount based on at least one of the driving information and the battery information, and control at least one of the ammonia supply amount and the conditions of the cracker based on the calculated predicted hydrogen consumption amount.

The display 140 may display a graphic image according to a control command from the apparatus controller 130.

The input unit 150 may sense internal status information of the ammonia tank 110.

Here, the internal status information may include at least one of temperature, pressure, and humidity of the ammonia tank 110.

The memory 160 may store the ammonia supply amount, the cracker conditions, the predicted hydrogen consumption amount, the internal status information, the graphic image, etc. according to control commands from the apparatus controller 130.

The camera 170 may capture an image of the front of the vehicle according to a control command from the apparatus controller 130.

However, the components shown in FIG. 2 are not essential for implementing the ammonia fuel cell vehicle control apparatus 100 according to the present disclosure, such that the ammonia fuel cell vehicle control apparatus 100 described herein may have more components or fewer components than those listed above.

The communication unit 105 may include one or more components that enable the apparatus to communicate with the external device, and may include at least one, for example, a broadcast reception module, a wired communication module, a wireless communication module, a near field communication module, and a location information module.

The input unit 150 is intended to input image information (or signal), audio information (or signal), data, or information input from a user, and may include one or more of at least one camera, at least one microphone, and a user input unit. Voice data or image data collected by the input unit 150 may be analyzed and processed by a control command from the user.

The display 140 is configured to display (output) information processed by the ammonia fuel cell vehicle control apparatus 100. For example, the ammonia fuel cell vehicle control apparatus 100 may display execution screen information of a running application (for example, an application), or user interface (UI) and graphic user interface (GUI) information according to such execution screen information through the display.

The memory 160 may store: data for supporting various functions of the ammonia fuel cell vehicle control apparatus 100 and a program for an operation of the control unit; input/output data (e.g., music files, still images, moving images, etc.); a number of application programs or applications running on the artificial intelligence-based ammonia fuel cell vehicle control 100; and data and commands for an operation of the apparatus. At least some of these application programs may be downloaded from an external server through wireless communication.

The memory 160 may include at least one type of storage medium such as a flash memory type, hard disk type, solid state disk (SSD) type, silicon disk drive (SDD) type, multimedia card micro type, card type memory (e.g., SD or XD memory, etc.), random access memory (RAM), static random access memory (SRAM), read-only memory (ROM), electrically erasable programmable read-only memory (EEPROM), programmable read-only memory (PROM), magnetic memory, magnetic disk and optical disk. Further, the memory 160 is separate from the ammonia fuel cell vehicle control apparatus 100, but may be a database connected thereto by wired or wirelessly, and may be implemented as a database system.

The apparatus controller 130 includes at least one core, and may be implemented with a memory that stores data for an algorithm for controlling operations of the components in the ammonia fuel cell vehicle control apparatus 100 or a program that reproduces the algorithm, and at least one processor (not shown) that performs the above-described operations using the data stored in the memory. In this case, the memory and processor may be implemented as a separate chip, respectively. Alternatively, the memory and processor may be implemented as a single chip.

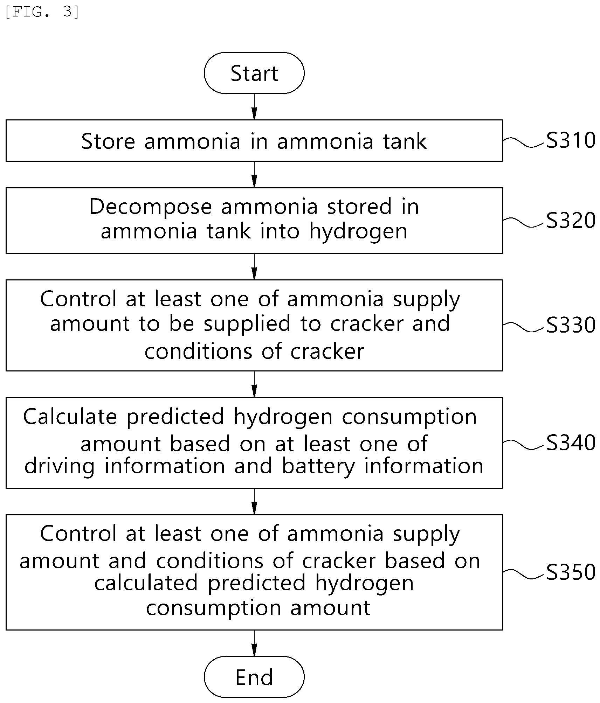

Further, in order to implement various embodiments according to the present disclosure which will be described in FIGS. 3 to 8 on the ammonia fuel cell vehicle control apparatus 100, the apparatus controller 130 may control any one of a plurality of the components described above or a combination thereof.

At least one component may be added or deleted corresponding to the performances of the components shown in FIG. 2. In addition, it will be easily understood by those skilled in the art that mutual positions of the components may be changed corresponding to the performance or structure of the system.

Meanwhile, each component shown in FIG. 2 may mean software or hardware components such as field programmable gate array (FPGA) and application specific integrated circuit (ASIC).

FIG. 3 is a flowchart illustrating procedures of an ammonia fuel cell vehicle control method according to an embodiment of the present disclosure. One embodiment of the present disclosure may be performed by the ammonia fuel cell vehicle control apparatus 100.

Ammonia may be stored in the ammonia tank (S310).

The ammonia stored in the ammonia tank may be decomposed into hydrogen (S320).

At least one of the ammonia supply amount to be supplied to the cracker and the conditions of the cracker may be controlled (S330).

The predicted hydrogen consumption amount may be calculated based on at least one of the driving information and the battery information (S340).

Then, at least one of the ammonia supply amount and the conditions of the cracker may be controlled based on the calculated predicted hydrogen consumption amount (S350).

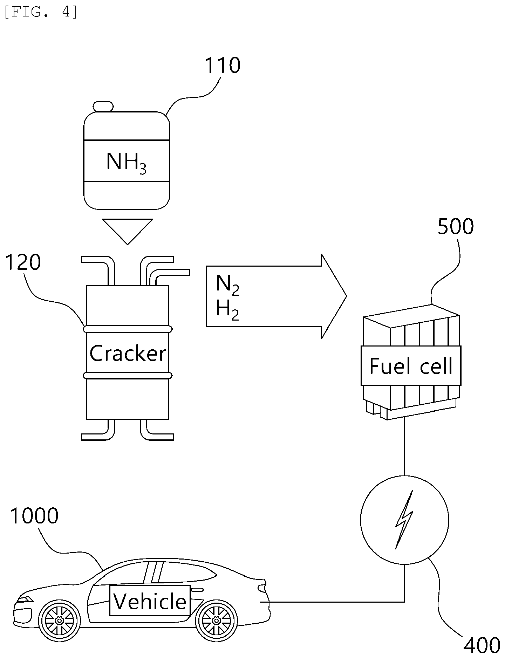

FIG. 4 is a view illustrating the concept of the ammonia fuel cell vehicle control method according to an embodiment of the present disclosure.

Referring to FIG. 4, the ammonia tank 110 may store ammonia (NH3).

The cracker 120 may decompose the ammonia (NH3) stored in the ammonia tank 110 into hydrogen (H2) and nitrogen (N2).

Hydrogen (H2) of the produced hydrogen and nitrogen may be supplied to a fuel cell 500.

The fuel cell 500 may generate electricity 400 which enables a vehicle 1000 to move.

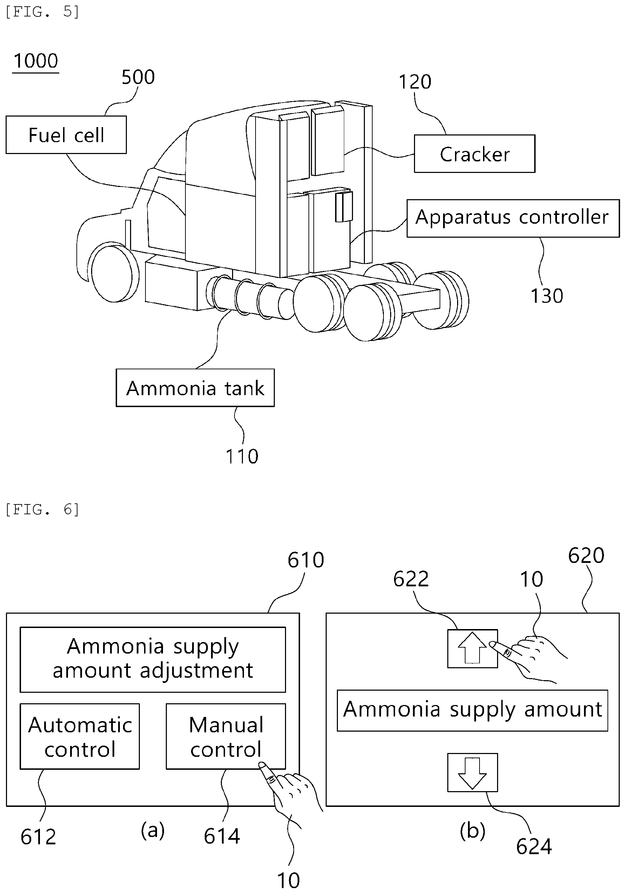

FIG. 5 is a view illustrating a state where the ammonia fuel cell vehicle control apparatus according to an embodiment of the present disclosure is mounted on the vehicle.

Referring to FIG. 5, the ammonia fuel cell vehicle control apparatus 100 may be mounted on the vehicle 1000.

The ammonia fuel cell vehicle control apparatus 100 may include the ammonia tank 110, the cracker 120, and the apparatus controller 130.

For example, the ammonia tank 110 may be mounted on a lower portion of the vehicle 1000.

The cracker 120 may be mounted at the back of the driver's seat of the vehicle 1000.

The apparatus controller 130 may also be mounted at the back of the driver's seat of the vehicle 1000.

The fuel cell 500 may be mounted on the side of the vehicle 1000.

FIG. 6 is a view illustrating an interface capable of adjusting an ammonia supply amount according to an embodiment of the present disclosure. FIG. 6 includes FIG. 6(a) and FIG. 6(b).

FIG. 6(a) is a view illustrating a process of selecting one of automatic control and manual control modes by a user in adjusting the ammonia supply amount.

FIG. 6(b) is a view illustrating a process of increasing or decreasing the ammonia supply amount by the user when the manual control mode is selected.

Referring to FIG. 6(a), the apparatus controller 130 may display an automatic control icon 612 or a manual control icon 614 on a screen 610 to select a mode for adjusting the ammonia supply amount by the user.

When receiving an input to select the automatic control icon 612, the apparatus controller 130 may automatically control the ammonia supply amount.

When receiving an input to select the manual control icon 614, as shown in FIG. 6(b), the apparatus controller 130 may display a screen 620 to control the ammonia supply amount according to the input from the user.

Referring to FIG. 6(b), when receiving an input from the user to select an icon 622 indicating increase, the apparatus controller 130 may increase the ammonia supply amount.

Referring to FIG. 6(b), when receiving an input from the user to select an icon 624 indicating decrease, the apparatus controller 130 may decrease the ammonia supply amount.

According to an embodiment of the present disclosure, by displaying an interface allowing a user to select the mode capable of adjusting the ammonia supply amount on the screen, the user may more easily control the ammonia supply amount, and the ammonia supply amount may be adjusted by the automatic or manual mode.

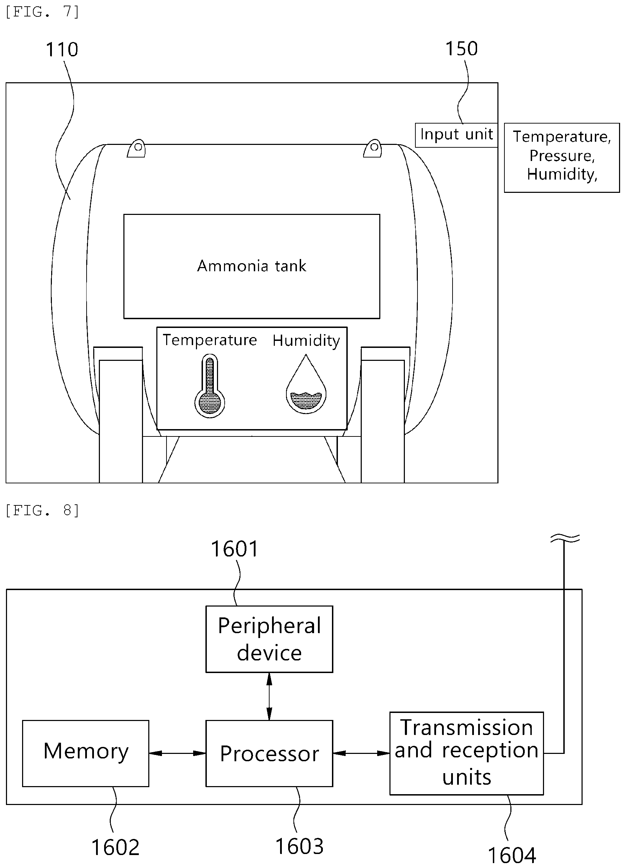

FIG. 7 is a view illustrating calculating a predicted hydrogen pressure and a consumption amount based on internal status information of the ammonia tank according to an embodiment of the present disclosure.

Referring to FIG. 7, the input unit 150 may sense the internal state of the ammonia tank 110. The input unit 150 may include a sensor unit.

Here, the internal status information may include the temperature, pressure, and humidity of the ammonia tank.

The apparatus controller 130 may calculate the predicted hydrogen consumption amount based on at least one of the driving information, the battery information, and the sensed internal status information.

In addition, the predicted hydrogen consumption amount may be calculated by considering at least one of the temperature, pressure, and humidity of the ammonia tank.

According to an embodiment of the present disclosure, the predicted hydrogen consumption amount may be additionally calculated based on the internal status information of the ammonia tank in addition to the driving information and the battery information, such that the predicted hydrogen consumption amount may be calculated more precisely.

FIG. 8 is a block diagram illustrating a configuration of the ammonia fuel cell vehicle control apparatus according to an embodiment of the present disclosure.

Referring to FIG. 8, the ammonia fuel cell vehicle control apparatus may include a device 1600. The device 1600 may include a memory 1602, a processor 1603, transmission and reception units 1604 and a peripheral device 1601. In addition, as an example, the device 1600 may further include other components, but it is not limited to the above-described embodiment.

In more detail, the device 1600 of FIG. 8 may be, for example, hardware/software architectures such as an NDN device, NDN server, content router, etc. In this case, as an example, the memory 1602 may be a non-removable memory or a removable memory. In addition, as an example, the peripheral device 1601 may include a display, GPS, or other peripheral devices, but it is not limited to the above-described embodiment.

In addition, as an example, the device 1600 described above may include a communication circuit like the transmission and reception units 1604, and may communicate with the external device based on this.

In addition, as an example, the processor 1603 may be at least one or more of general-purpose processors, digital signal processors (DSPs), DSP cores, controllers, microcontrollers, application specific integrated circuits (ASICs), field programmable gate arrays (FPGAs), and one or more of microprocessors associated with a state machine. That is, the processor may be hardware/software configurations which perform a control role to control the above-described device 1600.

In this case, the processor 1603 may execute computer-executable instructions stored in the memory 1602 to perform various essential functions of nodes. As an example, the processor 1603 may control at least one of signal coding, data processing, power control, input/output processing, and communication operations. In addition, the processor 1603 may control physical layers, MAC layers, and application layers. Further, as an example, the processor 1603 may perform authentication and security procedures at an access layer or the application layer, but it is not limited to the above-described embodiment.

As an example, the processor 1603 may perform communication with other devices through the transmission and reception units 1604. As an example, the processor 1603 may control a node to perform communicate with other nodes via a network through execution of the computer-executable instructions. That is, the communication performed in one embodiment of the present disclosure may be controlled. As an example, other nodes may be NDN servers, content routers, and other devices. As an example, the transmission and reception units 1604 may transmit an RF signal through an antenna and transmit signals based on various communication networks.

In addition, as antenna technology, for example, MIMO technology, beamforming, and the like may be applied, but it is not limited to the above-described embodiment. Further, the signals transmitted and received through the transmission and reception units 1604 may be modulated and demodulated, and then controlled by the processor 1603, but they are not limited to the above-described embodiment.

The various embodiments of the present disclosure do not list all possible combinations but are intended to describe representative aspects of the present disclosure, and contents described in the various embodiments may be applied independently or in combination of two or more.

## Claims

1. An apparatus (100) for controlling an ammonia fuel cell vehicle, the apparatus (100) comprising:
an ammonia tank (110) configured to store ammonia;
a cracker (120) configured to decompose the ammonia derived from the ammonia tank (110) into hydrogen; and
an apparatus controller (130) configured to control at least one of an ammonia supply amount (40) to be supplied to the cracker (120) and conditions (50) of the cracker (120),
wherein the apparatus controller (130) is configured to: calculate a predicted hydrogen consumption amount (30) based on at least one of driving information (10) and battery information (20) ; and
control at least one of the ammonia supply amount (40) and the conditions (50) of the cracker (120) based on the calculated predicted hydrogen consumption amount (30).

2. The apparatus (100) according to claim 1, wherein the apparatus controller (130) comprises a predicted hydrogen consumption amount calculation unit (131), an ammonia supply amount control unit (132), and a cracker condition control unit (133) .

3. The apparatus (100) according to claim 2, wherein the driving information (10) comprises city driving section information, highway driving section information and traffic congestion information, optionally together with route information and weather information, wherein route information optionally includes a departure point, a passing point, a destination, and a road type, and
the predicted hydrogen consumption amount calculation unit (130) calculates the predicted hydrogen consumption amount (30) based on at least one of the city driving section information, the highway driving section information and the traffic congestion information.

4. The apparatus (100) according to claim 2 or 3, wherein the ammonia supply amount control unit (132) is configured to:
calculate an ammonia supply amount (40) required to secure the calculated predicted hydrogen supply amount (30); and
control at least one of a pipe and a valve so as to supply the calculated ammonia supply amount to the cracker (120).

5. The apparatus (100) according to any one of claims 2 to 4, wherein the cracker condition control unit (133) controls internal conditions (50) of the cracker (120) so that an amount (30) of ammonia decomposed into hydrogen in the cracker (120) does not exceed the predicted hydrogen consumption amount (30), optionally wherein the internal conditions (50) of the cracker (120) includes one or more of temperature, pressure, humidity and flow rate of the cracker.

6. The apparatus (100) according to any one of claims 2 to 5, wherein the predicted hydrogen consumption amount calculation unit (131) is configured to: confirm at least one of the driving information (10) and the battery information (20) at a predetermined periodic interval, and
update the predicted hydrogen consumption amount (30) based on at least one of the driving information (10) and the battery information (20),
preferably wherein the battery information refers to information on the real-time state of battery charge of a battery installed in the vehicle.

7. The apparatus (100) according to any one of claims 1 to 6, further comprising a display (140) configured to display (140) a graphic image,
wherein the apparatus controller (130) is configured to:
display (140) icons to select automatic control or manual control of the ammonia supply amount (40) by a user on the display (140);
when receiving an automatic control input, automatically control the ammonia supply amount (40); and
when receiving a manual control input, control the ammonia supply amount (40) according to an input from the user.

8. The apparatus (100) according to any one of claims 1 to 7, further comprising an input unit (150) configured to sense internal status information of the ammonia tank (110),
wherein the apparatus controller (130) calculates the predicted hydrogen consumption amount (30) based on at least one of the driving information (10), the battery information (20), and the sensed internal status information.

9. The apparatus (100) according to claim 8, wherein the internal status information comprises at least one of temperature, pressure, and humidity of the ammonia tank (110).

10. A method for controlling an ammonia fuel cell vehicle which is performed by an apparatus (100) for controlling an ammonia fuel cell vehicle, the method comprising:
storing ammonia in an ammonia tank (110);
decomposing the ammonia stored in the ammonia tank (110) into hydrogen;
controlling at least one of an ammonia supply amount (40) to be supplied to the cracker (120) and conditions (50) of a cracker (120);
calculating a predicted hydrogen consumption amount (30) based on at least one of driving information (10) and battery information (20); and
controlling at least one of the ammonia supply amount (40) and the conditions (50) of the cracker (120) based on the calculated predicted hydrogen consumption amount (30).

11. The method according to claim 10, wherein the apparatus (100) used is an apparatus (100) defined by any one of claims 2 to 9.

12. The method according to claim 10 or 11, wherein after completion of a cycle of calculating the predicted hydrogen consumption amount, it is returned to the beginning of the cycle again based on the predicted hydrogen consumption amount and control the ammonia supply amount and the cracker conditions to reflect feedback and conduct feedback control.

13. A vehicle (1000) comprising an ammonia fuel cell (500) and an apparatus (100) for controlling the ammonia fuel cell as defined in any one of claims 1 to 9.
